# EUROPÄISCHE PATENTANMELDUNG

(11) **EP 2 119 592 A1**
(43) Veröffentlichungstag der Anmeldung: **18.11.2009**
(21) Anmeldenummer: 08156154.0
(22) Anmeldetag: 14.05.2008
(51) Int. Cl.: B60Q 1/08

(54) **Steuergerät zur Steuerung von Hauptscheinwerfern eines Kraftfahrzeugs**

(71) Anmelder: Hella KGaA Hueck & Co., 59552 Lippstadt (DE)
(72) Erfinder: Pollert, Markus, 61476 Kronberg (DE); Schwarz, Sergej, 59557 Lippstadt (DE)
(74) Vertreter: Downar, Michael

(57) **Zusammenfassung**

Steuergerät zur Steuerung der Lichtverteilung (3a, 3b, 3c, 3d) und der horizontalen Hell-Dunkel-Grenze (4) von Hauptscheinwerfern eines Kraftfahrzeugs (1),
- mit Schnittstellen zur Verbindung mit Sensoren, z. B. Bilderfassungsmitteln, über welche Sensorsignale, z. B. Bildsignale in das Steuergerät einlesbar sind,
- mit einem Signalverarbeitungsmittel zum Erzeugen von Steuersignalen für die Hauptscheinwerfer,
- wobei das Signalverarbeitungsmittel geeignet und eingerichtet ist aufgrund der Sensorsignale eine Lichtverteilung (3a, 3b, 3c, 3d) aus verschiedenen Lichtverteilungen (3a, 3b, 3c, 3d) auszuwählen und,
- wobei das Signalverarbeitungsmittel geeignet und eingerichtet ist Steuersignale zum Einstellen der ausgewählten Lichtverteilung (3a, 3b, 3c, 3d) durch die Hauptscheinwerfer zu Erzeugen,
- wobei das Signalverarbeitungsmittel geeignet und eingerichtet ist aufgrund der Sensorsignale die Hell-Dunkel-Grenze (4) der Hauptscheinwerfer vorzugeben,
- wobei das Signalverarbeitungsmittel geeignet und eingerichtet ist Steuersignale für zum Einstellen der ausgewählten Hell-Dunkel-Grenze (4) zu erzeugen,
- mit Schnittstellen zur Übermittlung der Steuersignale an die Hauptscheinwerfer,

wobei
das Steuergerät geeignet und eingerichtet ist, die Hell-Dunkel-Grenze (4) stets oberhalb oder auf einer für die ausgewählte Lichtverteilung (3a, 3b, 3c, 3d) vorgegebenen Leuchtweite (5) zu belassen.

## Beschreibung

Die Erfindung betrifft ein Steuergerät zur Steuerung der Lichtverteilung und der horizontalen Hell-Dunkel-Grenze von Hauptscheinwerfern eines Kraftfahrzeugs.

Ein bekanntes Steuergerät zur Steuerung der Lichtverteilung und der Hell-Dunkel-Grenze von Hauptscheinwerfern eines Kraftfahrzeugs weist Schnittstellen zur Verbindung des Steuergeräts mit Sensoren auf. Bei den Sensoren kann es sich z.B. um ein Bilderfassungsmittel handeln. Über die Schnittstelle können Sensorsignale, z.B. Bildsignale, in das Steuergerät eingelesen werden.

In einem Signalverarbeitungsmittel des Steuergeräts können Steuersignale für die Hauptscheinwerfer erzeugt werden. Das Signalverarbeitungsmittel ist geeignet und eingerichtet aufgrund der Sensorsignale eine Lichtverteilung aus verschiedenen Lichtverteilungen auszuwählen Ebenso ist das Signalverarbeitungsmittel geeignet und eingerichtet Steuersignale zum Einstellen der ausgewählten Lichtverteilung zu erzeugen.

Das Signalverarbeitungsmittel ist ferner dazu geeignet und eingerichtet aufgrund der eingelesenen Sensorsignale die Hell-Dunkel-Grenze der Hauptscheinwerfer vorzugeben und Steuersignale zum Einstellen der ausgewählten Hell-Dunkel-Grenze zu erzeugen. Über eine Schnittstelle können die von dem Signalverarbeitungsmittel des Steuergeräts erzeugten Steuersignale an die Hauptscheinwerfer übermittelt werden.

Ein Steuergerät der vorgenannten Art ist dazu geeignet, verschiedenen Lichtverteilungen auszuwählen, die an die Fahrsituation angepasst sind. So kann das Steuergerät beispielsweise Lichtverteilungen für Fahrten auf Landstraßen, Autobahnen oder im Stadtverkehr auswählen. Außerdem kann ein Steuergerät an die Witterung oder Sichtweite angepasste Lichtverteilungen auswählen, um den Fahrer eine möglichst blendfreie Fahrt zu ermöglichen und außerdem eine möglichst große Sichtweite und möglichst gute Ausleuchtung der Fahrbahn und der Verkehrssituation vor dem Fahrzeug zu ermöglichen. Auch das automatische Kurvenlicht ist eine besondere Lichtverteilung, nämlich eine für das Durchfahren einer Kurve. Ein Beleuchtungssystem mit einem solchen Steuergeräts ist auch als *adaptive frontlightning system* (AFS) bekannt geworden.

Das automatische Einstellen der horizontalen Hell-Dunkel-Grenze bezweckt dagegen, eine Blendung des vorausfahrenden Verkehrs oder des entgegenkommenden Verkehrs möglichst zu verhindern. Dieses kann dadurch erreicht werden, dass die Hell-Dunkel-Grenze soweit abgesenkt wird, so dass sich das vorausfahrende oder entgegenkommenden Fahrzeug außerhalb des Lichtkegel der Hauptscheinwerfer befindet.

Bei den bisherigen Steuergeräten erfolgt das Festlegen der Hell-Dunkel-Grenze und die Auswahl der Lichtverteilung unabhängig voneinander. So kann es beispielsweise dazu kommen, dass aufgrund der Sensordaten einerseits die Lichtverteilung für eine Autobahnfahrt ausgewählt wird und andererseits aufgrund des kurzen Abstands zu einem vorausfahrenden Fahrzeug die Hell-Dunkel-Grenze soweit abgesenkt wird, dass nur noch wenige Meter vor dem Fahrzeug ausgeleuchtet werden.

In einem anderen Fall ist beispielsweise die Lichtverteilung für eine Landstraßenfahrt ausgewählt und aufgrund eines entgegenkommenden Fahrzeugs wird die Hell-Dunkel-Grenze immer weiter abgesenkt. Es wird dann, in dem Moment in dem das entgegenkommende Fahrzeug nur noch wenige Meter vor dem Fahrzeug ist, nur noch ein Bereich von wenigen Metern vor dem Fahrzeug ausgeleuchtet. Insbesondere der zweite geschilderte Fall ist risikoreich für den Fahrer des Fahrzeugs. Er fährt nämlich gewissermaßen ins Dunkle und kann allenfalls den unmittelbar vor dem Fahrzeug liegenden Bereich der Straße erkennen. Die Sichtweite ist dann mit hoher Wahrscheinlichkeit nicht der Geschwindigkeit angemessen.

Hier setzt die vorliegende Erfindung an.

Der vorliegenden Erfindung liegt das Problem zu Grunde, ein Steuergerät für die Hauptscheinwerfer eines Kraftfahrzeugs so zu verbessern, dass eine für die Sicherheit notwendige Mindestleuchtweite nicht unterschritten wird.

Diese Aufgabe wird erfindungsgemäß dadurch gelöst, dass das Steuergerät geeignet und eingerichtet ist, die Hell-Dunkel-Grenze stets oberhalb oder auf einer für die ausgewählte Lichtverteilung vorgegebenen Leuchtweite zu belassen. Die von der Lichtverteilung vorgegebene Leuchtweite stellt somit die Mindestleuchtweite dar. Diese Mindestleuchtweite kann durch die Adaptierung der Hell-Dunkel-Grenze z.B. in Abhängigkeit von einem vorausfahrenden oder entgegenkommenden Fahrzeug nicht unterschritten werden.

Gemäß der Erfindung kann insbesondere das Signalverarbeitungsmittel des Steuergeräts geeignet und eingerichtet sein, die Hell-Dunkel-Grenze oberhalb oder auf der für die ausgewählte Lichtverteilung vorgegebenen Leuchtweite zu belassen.

Die Lichtverteilungen, die mittels des erfindungsgemäßen Steuergeräts einstellbar sind, können Lichtverteilungen für die Fahrten des Kraftfahrzeugs im Stadtverkehr, auf Landstraßen, auf Autobahnen, in Kurven, beim Abbiegen, für Rechtsverkehr, für Linksverkehr und/oder für anderes sein. Über die verschiedenen Lichtverteilungen wird in den unterschiedlichen Situationen stets eine angepasste Ausleuchtung der Fahrbahn ermöglicht.

Die horizontale Hell-Dunkel-Grenze kann durch das Steuergerät automatisch in Abhängigkeit von der Sicht, von der Witterung, z.B. in Abhängigkeit von Niederschlägen, von vorausfahrenden und/oder entgegenkommenden Fahrzeugen und/oder anderem einstellbar sein.

Das Steuergerät ist vorteilhaft so eingerichtet, dass die Hell-Dunkel-Grenze bei vorausfahrenden und/oder entgegenkommenden Fahrzeugen nicht weiter als die für die ausgewählte Lichtverteilung vorgegebene minimale Leuchtweite nach unten verschoben wird. Bei fehlendem entgegenkommenden oder vorausfahrenden Fahrzeug kann die Hell-Dunkel-Grenze dann über die vorgegebene minimale Leuchtweite der Lichtverteilung hinaus nach oben verschoben werden. So kann nach erfolgter Begegnung mit einem entgegenkommenden Fahrzeug die Hell-Dunkel-Grenze durch das Steuergerät automatisch nach oben verschoben werden, um eine Ausleuchtung der Fahrbahn über die von der Lichtverteilung vorgegebene minimale Leuchtweite hinaus zu erreichen.

Ein erfindungsgemäßes Steuergerät kann Teil einer Anordnung eines Kraftfahrzeugs aus Hauptscheinwerfern, Sensoren, insbesondere wenigstens einem Bilderfassungsmittel zum Erfassen von entgegenkommenden und/oder vorausfahrenden Fahrzeugen sein. Die von dem Steuergerät erzeugten Steuersignale können an untergeordnete Steuergeräte der Hauptscheinwerfer übermittelt werden. In diesen untergeordneten Steuergeräten können die Steuersignale dann in Stellsignale für Aktoren der Hauptscheinwerfer umgesetzt werden.

Anhand der beigefügten Zeichnungen wird die Erfindung nachfolgend näher erläutert. Dabei zeigt:
- Fig. 1: die Ausleuchtung einer Landstraße bei automatisch eingestellter HellDunkel-Grenze bei entferntem entgegenkommenden Fahrzeug,
- Fig. 2: die Ausleuchtung der Landstraße bei näherem entgegenkommenden Fahrzeug und durch die Lichtverteilung vorgegebener minimaler Leuchtweite,
- Fig. 3: die Ausleuchtung einer Autobahn bei automatisch eingestellter HellDunkel-Grenze bei entferntem vorausfahrenden Fahrzeug,
- Fig. 4: die Ausleuchtung der Autobahn bei näherem vorausfahrenden Fahrzeug und durch die Lichtverteilung vorgegebener minimaler Leuchtweite.

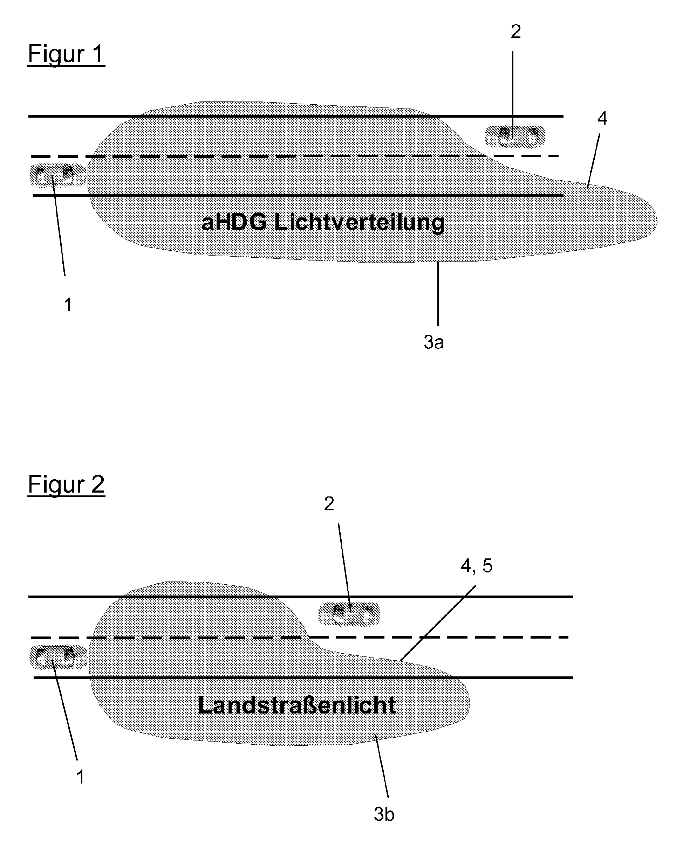

Die Figuren 1 und 2 zeigen eine Situation, in welcher ein erstes Fahrzeug 1 auf einer Landstraße unterwegs ist. Auf der Gegenfahrbahn kommt dem ersten Fahrzeug 1 ein zweites Fahrzeug 2 entgegen. Die Hauptscheinwerfer des ersten Fahrzeugs 1 sind eingeschaltet und beleuchten einen Bereich 3a mit einer Hell-Dunkel-Grenze 4. Die Hell-Dunkel-Grenze 4 ist im Fall der Figur 1 durch das Steuergerät automatisch eingestellt. Diese adaptive Hell-Dunkel-Grenze 4 ist so eingestellt, dass das zweite Fahrzeug 2 außerhalb des ausgeleuchteten Bereichs ist.

Bei einer weiteren Annäherung dem zweiten Fahrzeug 2 an das erste Fahrzeug 1 wird die Hell-Dunkel-Grenze 4 abgesenkt. Es tritt dann die Situation ein, wie sie in der Figur 2 dargestellt ist. In dieser Situation hat die Hell-Dunkel-Grenze 4 die für die Lichtverteilung "Landstraßenlicht" 3b notwendige minimale Leuchtweite 5 erreicht. Ein weiteres absenken der Hell-Dunkel-Grenze 4 über die minimale Leuchtweite der Lichtverteilung "Landstraßenlicht" hinaus führte zu einer Gefährdung des ersten Fahrzeugs 1. Senkte man die Hell-Dunkel-Grenze 4 über die minimale Leuchtweite der Lichtverteilung "Landstraßenlicht "ab, wäre dadurch der vor dem Fahrzeug 1 liegende Straßenabschnitt nicht mehr ausreichend beleuchtet.

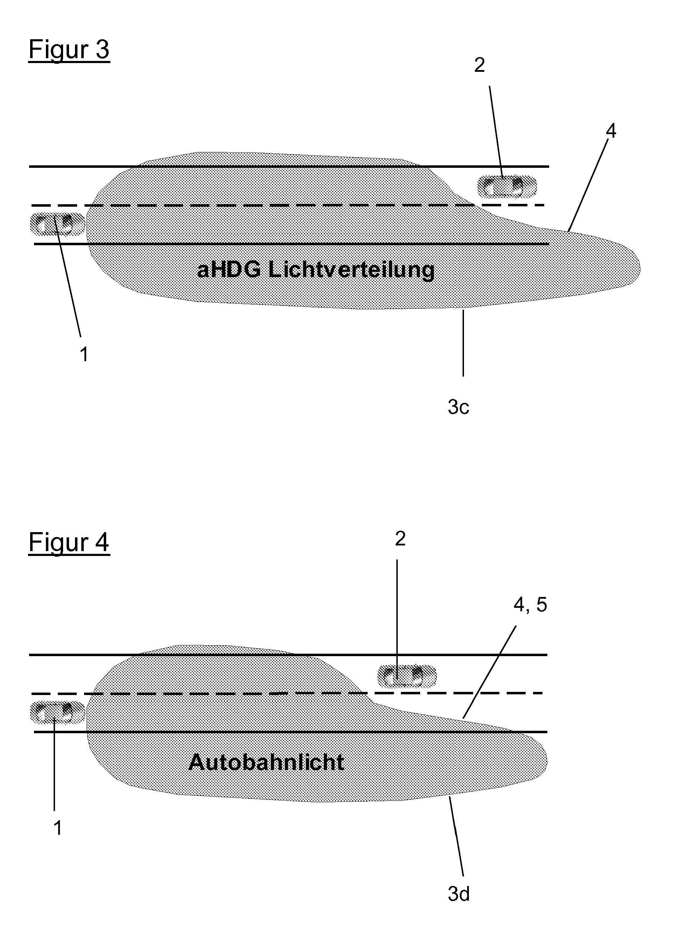

Die Figuren 3 und 4 zeigen eine Situation, in welcher das erste Fahrzeug 1 auf einer Autobahn unterwegs ist. Auf der linken Spur fährt dem ersten Fahrzeug 1 ein zweites Fahrzeug 2 voraus. Die Geschwindigkeit des ersten Fahrzeugs 1 ist dabei geringfügig größer als die des zweiten Fahrzeugs 2. Der Abstand zwischen dem ersten Fahrzeug 1 und dem zweiten Fahrzeug 2 ist daher in der Situation gemäß der Figur 4 gegenüber der Situation gemäß der Figur 3 verkürzt.

Das Steuergerät sorgt für eine automatische Einstellung der Hell-Dunkel-Grenze 4. Die Hell-Dunkel-Grenze 4 wird wegen der Verkürzung des Abstandes abgesenkt. Dadurch kann gewährleistet werden, dass das Fahrzeug 2 nicht in dem von dem ersten Fahrzeug 1 ausgeleuchteten Bereich eintritt. Der Fahrzeugführer des zweiten Fahrzeugs 2 wird daher durch das Fahrzeug 1 nicht geblendet.

Die Hell-Dunkel-Grenze 4 wird jedoch nicht über die minimale Leuchtweite 5 der Lichtverteilung 3c, d "Autobahnlicht" abgesenkt. Dadurch wird gewährleistet, dass der Fahrzeugführer des ersten Fahrzeugs 1 stets eine angemessen ausgeleuchtete Fahrbahn vor seinem Fahrzeug hat.

### Bezugszeichenliste

- 1: erstes Fahrzeug
- 2: zweites Fahrzeug
- 3a: Lichtverteilung "Landstraßenlicht" mit adaptiver Hell-Dunkel-Grenze
- 3b: Lichtverteilung "Landstraßenlicht" bei minimaler Leuchtweite
- 3c: Lichtverteilung "Autobahnlicht" mit adaptiver Hell-Dunkel-Grenze
- 3d: Lichtverteilung "Autobahnlicht" bei minimaler Leuchtweite
- 4: Hell-Dunkel-Grenze

## Patentansprüche

1. Steuergerät zur Steuerung der Lichtverteilung (3a, 3b, 3c, 3d) und der horizontalen Hell-Dunkel-Grenze (4) von Hauptscheinwerfern eines Kraftfahrzeugs (1),
- mit Schnittstellen zur Verbindung mit Sensoren, z. B. Bilderfassungsmitteln, über welche Sensorsignale, z. B. Bildsignale in das Steuergerät einlesbar sind,
- mit einem Signalverarbeitungsmittel zum Erzeugen von Steuersignalen für die Hauptscheinwerfer,
- wobei das Signalverarbeitungsmittel geeignet und eingerichtet ist aufgrund der Sensorsignale eine Lichtverteilung (3a, 3b, 3c, 3d) aus verschiedenen Lichtverteilungen (3a, 3b, 3c, 3d) auszuwählen und,
- wobei das Signalverarbeitungsmittel geeignet und eingerichtet ist Steuersignale zum Einstellen der ausgewählten Lichtverteilung (3a, 3b, 3c, 3d) durch die Hauptscheinwerfer zu Erzeugen,
- wobei das Signalverarbeitungsmittel geeignet und eingerichtet ist aufgrund der Sensorsignale die Hell-Dunkel-Grenze (4) der Hauptscheinwerfer vorzugeben,
- wobei das Signalverarbeitungsmittel geeignet und eingerichtet ist Steuersignale für zum Einstellen der ausgewählten Hell-Dunkel-Grenze (4) zu erzeugen,
- mit Schnittstellen zur Übermittlung der Steuersignale an die Hauptscheinwerfer,
**dadurch gekennzeichnet, dass**
das Steuergerät geeignet und eingerichtet ist, die Hell-Dunkel-Grenze (4) stets oberhalb oder auf einer für die ausgewählte Lichtverteilung (3a, 3b, 3c, 3d) vorgegebenen Leuchtweite (5) zu belassen.

2. Steuergerät nach Anspruch 1, **dadurch gekennzeichnet, dass** das Signalverarbeitungsmittel des Steuergeräts geeignet und eingerichtet ist die Hell-Dunkel-Grenze (4) oberhalb oder auf einer für die ausgewählte Lichtverteilung (3a, 3b, 3c, 3d) vorgegebene Leuchtweite (5) zu belassen.

3. Steuergerät nach Anspruch 1 oder 2, **dadurch gekennzeichnet, dass** Lichtverteilungen (3a, 3b, 3c, 3d) für Fahrten des Kraftfahrzeugs im Stadtverkehr, auf Landstraßen, auf Autobahnen, in Kurven, beim Abbiegen, für Rechtsverkehr, für Linksverkehr und/oder für anderes einstellbar sind.

4. Steuergerät nach einem der Ansprüche 1 bis 3, **dadurch gekennzeichnet, dass** die Hell-Dunkel-Grenze (4) in Abhängigkeit von der Sicht, von der Witterung, von vorausfahrenden und/oder entgegenkommenden Fahrzeugen und/oder anderem einstellbar ist.

5. Steuergerät nach Anspruch 4, **dadurch gekennzeichnet, dass** das Steuergerät geeignet und eingerichtet ist die Hell-Dunkel-Grenze (4) bei vorausfahrenden und/oder entgegenkommenden Fahrzeugen nicht weiter als die für die ausgewählte Lichtverteilung (3a, 3b, 3c, 3d) vorgegebene minimale Leuchtweite (5) nach unten zu verschieben.

6. Steuergerät nach Anspruch 5, **dadurch gekennzeichnet, dass** das Steuergerät geeignet und eingerichtet ist die Hell-Dunkel-Grenze (4) bei fehlenden entgegenkommenden oder vorausfahrenden Fahrzeugen die Hell-Dunkel-Grenze über die vorgegebene Leuchtweite (5) hinaus nach oben zu verschieben.

7. Anordnung für ein Kraftfahrzeug aus Hauptscheinwerfern, Sensoren, darunter wenigstens ein Bilderfassungsmittel zum Erfassen von entgegenkommenden und/oder vorausfahrenden Fahrzeugen, und einem Steuergerät zum Steuern der Lichtverteilung (3a, 3b, 3c, 3d) und der horizontalen Hell-Dunkel-Grenze (4) der Hauptscheinwerfer,
**dadurch gekennzeichnet, dass** das Steuergerät nach einem der Ansprüche 1 bis 6 ausgebildet ist.

8. Anordnung nach Anspruch 7, **dadurch gekennzeichnet, dass** die Hauptscheinwerfer untergeordnete Steuergeräte aufweisen, die zum Umsetzen der Steuersignale des Steuergeräts in Stellsignale für Aktoren der Hauptscheinwerfer geeignet und eingerichtet sind.
